**Europäisches Patentamt**

**European Patent Office**

**Office européen des brevets**

(19)

(11) Publication number: **0 063 924**
**B2**

(12) # NEW EUROPEAN PATENT SPECIFICATION

(45) Date of publication of the new patent specification: **14.03.90**

(51) Int. Cl.⁵: **C 21 B 13/14, C 22 B 5/18**

(21) Application number: **82302056.5**

(22) Date of filing: **22.04.82**

(54) Methods for melting and refining a powdery ore containing metal oxides and apparatuses for melt-refining said ore.

(30) Priority: 28.04.81 JP 63294/81
08.05.81 JP 68110/81
21.05.81 JP 75639/81
16.07.81 JP 111357/81

(43) Date of publication of application:
**03.11.82 Bulletin 82/44**

(45) Publication of the grant of the patent:
**29.10.86 Bulletin 86/44**

(45) Mention of the opposition decision:
**14.03.90 Bulletin 90/11**

(84) Designated Contracting States:
**DE FR GB SE**

(56) References cited:
EP-A-0 010 627    FR-A-1 218 464
DE-A-2 132 150    FR-A-1 243 733
DE-A-2 401 909    FR-A-2 215 478
DE-A-2 424 932    FR-A-2 326 475
DE-B-1 024 245    US-A-3 145 094
DE-B-1 122 564    US-A-3 936 296
DE-B-1 266 330

(73) Proprietor: **KAWASAKI STEEL CORPORATION**
**No. 1-28, 1-Chome Kitahonmachi-Dori**
**Fukiai-Ku Kobe-Shi Hyogo 651 (JP)**

(72) Inventor: **Hamada, Takao**
**18-11, Kurosuna 1-chome**
**Chiba City (JP)**
Inventor: **Tsuchiya, Nobuo**
**25-11, Mitsuwadai 1-Chome**
**Chiba City (JP)**
Inventor: **Inatani, Toshihiro**
**1925-144, Hirayama-Cho**
**Chiba City (JP)**
Inventor: **Katayama, Eiji**
**611-115, Semata**
**Ichihara City (JP)**
Inventor: **Koitabashi, Toshimitsu**
**221, Korimoto 2-Chome**
**Ichihara City (JP)**
Inventor: **Okabe, Kyoji**
**944, Takeishi-Cho 2-Chome**
**Chiba City (JP)**
Inventor: **Sumito, Mitsuo**
**723, Nitona-Cho**
**Chiba City (JP)**
Inventor: **Takada, Yoshiyasu**
**20-6, Minami-Cho 2-Chome**
**Chiba City (JP)**

(74) Representative: **Overbury, Richard Douglas et al**
**HASELTINE LAKE & CO Hazlitt House 28**
**Southampton Buildings Chancery Lane**
**London WC2A 1AT (GB)**

EP 0 063 924 B2

Courier Press, Leamington Spa, England.

## Description

The present invention relates to melting and refining a powdery or fine granular ore containing metal oxides by preliminarily reducing said ore and then melting and reducing said preliminarily reduced ore and is concerned with melting and refining the ore by preliminarily reducing the ore by means of a reducing gas generated upon the melting and reducing of the ore and then melting and reducing (referred to as "melt-reducing" hereinafter) the preliminarily reduced ore.

In order to refine iron ore or other metal oxide ores, various methods have been carried out in practice but the development of novel refining methods has been demanded in order to solve problems regarding resources, energy and the atmosphere expected in the future.

With regard to the form of the available ores containing iron oxide or other metal oxides, there is a tendency for the amounts of lump ore to be reduced and the amounts of powdery ore to be increased. In particular, in order to improve the quality of low grade ores, mineral processing, such as magnetic separation, floatation and the like, have been carried out and it is expected that the ratio of powdery ores to lump ores will increase in future. Most of the presently operating refining furnaces need lump ores or previously treated lump ores and thus powdery ores are transformed into pellets, sintered ores, briquets, and the like. Such a transformation needs superfluous materials, such as solvents, binders, etc., fuels and motive powers. When a firing furnace is used for carrying out such a transformation with heat, NOx, SOx and dusts are generally formed and if these substances are directly discharged, a problem of environmental pollution occurs unless installations for preventing environmental pollution are built but these are expensive.

As a technique capable of directly using powdery ore, a roasting or a reducing process using a fluidized bed has been used to some extent. However, when the preliminarily reduced powdery ore is used in an electric furnace, converter or other melting furnace, in most cases a binder is added thereto and the mixture is formed into briquets and the like. It has been proposed to use powdery ore as such by utilizing an arc furnace or plasma but the amount of electric power consumed is very large and in countries where electric power costs are high, as in Japan, this is not a competitive process.

As a means for supplying the heat energy necessary for the reduction and heating, it is known to utilise combustion heat where coke is burnt using mainly air or pure oxygen without using electric power and blast furnaces for refining iron, nickel, copper, etc use this process. In particular, it is well known that the iron making blast furnace is highly efficient as a refining furnace due to the operative technical progress and enlargement of the size of the furnace. But the iron making blast furnace is a high shaft furnace and in order to ensure air permeability in the furnace, the above described lump ores or transformed powdery ores are necessary. Further the lump ores and coke are piled in layer-form in the furnace, so that coke having a high strength is needed. For the production of coke having a high strength, a high caking coal is necessary but this is expensive and supplies of it can be expected to dwindle in future. Alternatively a low caking coal or a usual coal can be used, but in this case an improving binder is necessary and the production cost is therefore increased.

It has been proposed in Japanese Patent Application Publication No. 2,103/59 and Japanese Patent Laid-Open Application No. 142,313/79 that powdery preliminarily reduced ore, prepared by preliminarily reducing powdery ore, is melted and reduced in the powdery state. In the former process, the burning assistant for burning the fuel is a gas containing more than 85% of oxygen and, in the latter process, the burning assistant is pure oxygen. In order to maintain the molten metal pool in the melt-reducing furnace at a high temperature, a gas having a $CO_2/CO$ ratio of 1, which has an oxidizing function against Fe, is evolved through the reaction of coal with oxygen in the former process and carbon attached to the preliminarily reduced ore is burnt with pure oxygen in the latter process. Furthermore, in the former process, the gas is oxidizing, so that iron oxide is apt to be formed into slag in an unreduced state and discharged out of the furnace, and in the latter process, an unevenness of the temperature in the combustion furnace and an unevenness of the oxygen partial pressure are apt to be caused, so that it is difficult to stabilise the operating conditions in the melting furnace.

In FR—A—1243733 there is disclosed a melt-refining process wherein a reducing gas generated in a melting and reducing furnace is fed to a preliminary reducing furnace to preliminarily reduce a metal ore which is then introduced into the melting and reducing furnace where it is reduced to molten metal by a carbonaceous reducing agent and air or oxygen enriched air. In this case, however, the reducing gas is first passed through a heat exchanger, and hence subjected to cooling, before it is fed to the preliminary reducing furnace. Also, the preliminary reduced ore is blown into the melting and reducing furnace through a burner together with the air and the reducing agent and the air is preheated to a temperature of about 500°C only.

In FR—A—2215478 there is also disclosed a melt-refining process wherein a reducing gas generated in a melting and reducing furnace is fed to a preliminary reducing furnace to preliminarily reduce a metal ore which is then fed to the melting and reducing furnace. In this case also, the reducing gas is first passed through a heat exchanger and cooled before it enters the preliminary reducing furnace. The melting and reducing furnace has upper and lower inlets. The lower inlets are used for the introduction of the preliminarily reduced ore, an inert or reducing gas, oxygen, and a hydrocarbon gas. Only reducing gas is introduced through the upper inlet.

The present invention aims to provide an improved production method wherein various drawbacks, possessed in the previously proposed methods for producing a molten metal from a powdery ore containing metal oxides, are obviated.

According to the present invention there is provided a method for melting and refining a powdery or fine granular ore containing metal oxide comprising

(1) charging said ore and a reducing gas into a fluidized bed type of preliminary reducing furnace to preliminarily reduce said ore therein, said reducing gas being a gas at elevated temperature generated in a vertical melting and reducing furnace containing a packed bed or fluidized bed of carbonaceous solid reducing agent,

(2) charging the preliminarily reduced ore heated at a high temperature into said melting and reducing furnace,

(3) introducing air or oxygen-enriched air at elevated temperature into said melting and reducing furnace at a position higher than the surface of the molten metal and molten slag collected at the bottom of the furnace so that said ore is melted and reduced by said carbonaceous solid reducing agent and air or oxygen-enriched air, and

(4) discharging molten metal and molten slag from the melting and reducing furnace, characterised in that said melting and reducing furnace includes upper and lower inlets, preliminarily reduced ore being introduced via at least the upper of the inlets and air or oxygen enriched air being introduced via at least the lower of the inlets.

For a better understanding of the invention and to show how the same may be carried into effect, reference will now be made, by way of example, to the accompanying drawings, wherein:

Figure 1 is a schematic view showing melting and refining in accordance with one embodiment of a first aspect of the present invention;

Figure 2 is a schematic view showing melting and refining in accordance with another embodiment of the first aspect of the present invention;

Figure 3 is a schematic view showing melting and refining in accordance with an embodiment of a second aspect of the present invention;

Figure 4 is a schematic view showing melting and refining in accordance with one embodiment of a third aspect of the present invention;

Figure 5 is a schematic view showing melting and refining in accordance with another embodiment of the third aspect of the present invention; and

Figure 6 is a schematic view showing melting and refining in accordance with an embodiment of a fourth aspect of the present invention.

In accordance with a first aspect of the invention, a packed bed composed of the carbonaceous solid reducing agent is provided in the melting and reducing furnace (hereinafter referred to as the melt-reducing furnace) and preheated air or preheated air with added oxygen is blown into the packed bed through inlets in the form of tuyeres. The preliminarily reduced powdery or fine granular ore (and optionally a flux) or a mixture of powdery or fine granular ore (and optionally powdery flux) which has been subjected to preliminary reduction is carried by a gas flow and is also blown into the furnace from tuyeres. The charged ore is melted in the highly heated zones at the circumference of the tuyere top end portions and the molten ore is reduced as it drops down through the above described packed bed. The molten metal is collected together with the molten slag at the bottom of the melt-reducing furnace and timely discharged out of the furnace. The above described preliminarily reduced ore is obtained by a preliminary reduction using a reducing gas discharged from the melt-reducing furnace. The flux serves as a melt-promoting agent or a desulfurizing agent during the melt-reduction and as the flux, use may be made of limestone, silica, dolomite, turpentine, etc. according to the property of the ore. For example, when the ore is difficulty soluble, such as chromium ore, the powdery ore and a powdery flux are previously mixed and then granulated using a fluidizing granulating system to form mixed particles, the mixed particles are carried into a fluidized drying furnace to dry the particles, the dried particles are carried into a fluidized firing furnace to fire the particles and the fired particles are carried into the fluidized preliminary reducing furnace to preliminarily reduce said particles. Then the resultant easily soluble preliminarily reduced particles consisting of the preliminarily reduced ore and the flux are melted and reduced in the melt-reducing furnace.

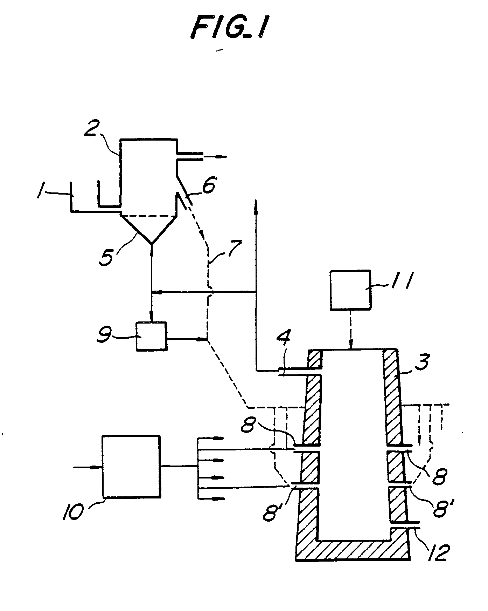

Figure 1 illustrates one embodiment of this first aspect of the invention. Powdery or fine granular metal oxide is fed from a feeder 1 to a preliminary reducing furnace 2. A part or the whole of a gas, heated at a high temperature, which is discharged from a vertical melt-reducing furnace 3 through a gas outlet 4 is directly introduced into the preliminary reducing furnace 2 through a gas inlet 5 in the preliminary reducing furnace 2 and dries, heats and preliminarily reduces the metal oxide in the preliminary reducing furnace by a fluidized system. Thus preliminarily reduced ore is discharged from an outlet 6 and blown into the vertical furnace 3 together with preheated air through a pipe 7 shown by a dotted line and tuyeres 8 and/or 8'. In this case, in order to make the transfer of the preliminarily reduced ore in the pipe 7 easy, it is advantageous to use a part of the gas discharged from the vertical furnace 3, after the pressure of said gas has been raised by means of a pressurizing device 9, as a carrier gas. The heated air (referred to as "hot air" hereinafter) blown into the vertical furnace 3 is heated to 800—1,300°C in a gas heating furnace 10. Oxygen gas may be blown together with the hot air. Furthermore, a flux may be blown together with the preliminarily reduced

3

ore into the vertical furnace 3 through the tuyere by the hot air in order to advantageously effect the melt-reducing refining.

A carbonaceous solid reducing agent is fed into the vertical furnace 3 through a feeding device 11 to form a packed bed in the furnace 3 and raceways are formed in the furnace 3 due to the hot air in the vicinity of the tuyere tops in the same manner as in the vicinity of the tuyere top in a blast furnace and high temperature zones at 2,000—2,500°C are formed. The preliminarily reduced ore blown into these zones with the hot air or oxygen is immediately heated and easily melted. The melted ore is reduced whilst it drops down to a lower portion of the furnace 3 to form a molten metal and a molten slag and effect the refining. The refined metal is collected in the furnace bottom portion and timely discharged out of the furnace from a taphole 12.

The circumference of the above described raceway portions forming the high temperature zones is bounded by the packed bed consisting of lump carbonaceous reducing agent and the gas at the circumference of the raceway portions is low in oxygen content, that is the oxygen partial pressure is low. Thus the reduction of the preliminarily reduced ore, which is melted at the raceway portions in the furnace 3, is readily carried out.

In the present invention, as the carbonaceous solid reducing agent, use may be made of lump coke, lump char or coal, alone or in admixture. The height of the vertical furnace 3 may be less than that of a usual blast furnace and the preliminarily reduced ore is supplied into the furnace 3 from the tuyeres, so that a reducing agent having high strength, as in a blast furnace, is not needed. Hence expensive caking coal is not needed and this is commercially advantageous.

In the present invention, the preliminarily reduced ore is once oxidized by oxygen in the hot air in the raceway portions and heated and melted due to the reaction heat. The reduction ratio is high and the use of the preliminarily reduced ore at a high temperature renders the melting easy and the present invention is advantageous in this respect. The preliminary reduction ratio is varied depending upon the kind of ore and the like but the best results can be obtained within the range of 40—80%.

In order that the preheated and preliminarily reduced ore blown into the furnace together with the hot air through the tuyeres is melted and reduced near the tuyere tops, a large heat energy is necessary and, even if said ore is melted in the vicinity of the tuyere tops, when the heat supplement at the lower portion of the furnace is insufficient the reduction of the molten ore is not satisfactory and operation becomes impossible due to cooling down of the furnace floor. In order to prevent this cooling down, the tuyeres must be provided at upper and lower stages. The preliminarily reduced ore is mainly fed from tuyeres 8 positioned at the upper stage and melted in the vicinity of the tuyere tops in the upper stage and the lower portion of the furnace is heated to a high temperature by tuyeres 8' in the lower stage to supply the heat energy necessary for reducing the molten ore dropping down from the vicinity of the tuyere tops 8 in the upper stage.

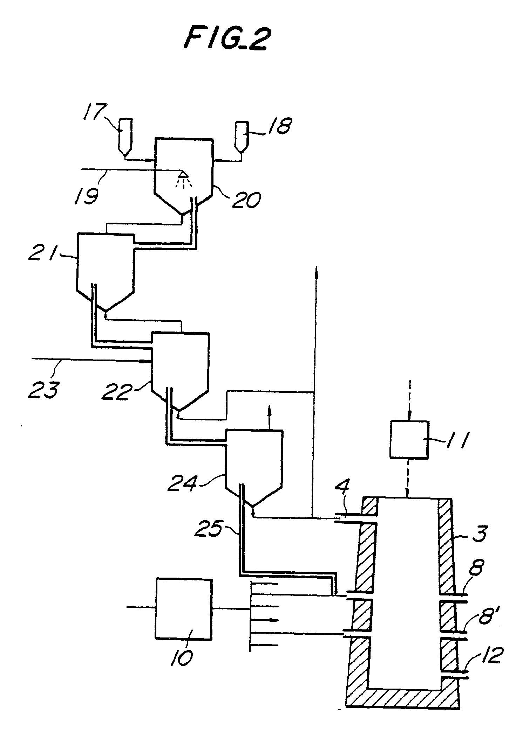

Another embodiment of this first aspect of the present invention will be explained with respect to Figure 2 where parts corresponding to parts of Figure 1 are denoted by like reference numerals.

In Figure 2, as the vertical furnace 3 which melts and reduces the preliminarily reduced ore, use may be made of the same vertical furnace as shown in Figure 1. The difference between the production system of Figure 2 and the system shown in Figure 1 is as follows. In Figure 1, the preliminarily reduced ore obtained by subjecting the powdery ore to a fluidized reduction in the preliminary reducing furnace 2 is discharged from the outlet 6 and fed into the furnace 3 together with hot air via the guide pipe 7 and the tuyeres while in Figure 2, fine granular ore and a flux are fluidized and granulated by means of a fluidized granulating device 20 to prepare mixed particles, then the mixed particles are fluidized and dried by means of a drier 21, and the dried particles are fluidized and fired in firing furnace 22 to prepare fired mixed particles. After this the particles are preliminarily reduced in a preliminary reducing furnace 24 and the preliminarily reduced particles are charged into the melt-reducing furnace through tuyeres 8 and, if necessary, tuyeres 8'.

The above described steps will be explained in more detail.

Powdery or fine granular ore and a powdery flux are charged into the granulating device 20 from storage tanks 17 and 18 respectively and granulated through a fluidizing system while feeding water from a spray 19 to prepare mixed particles of the ore and the flux (referred to merely as "mixed particles" herinafter). The fluidizing gas used is the exhaust gas from the drier 21. The size of the particles is preferred to be less than 3 mm having regard to the subsequent steps of drying, firing and preliminary reduction and the need to transfer the particles between the respective steps. The green mixed particles produced in device 20 are then fluidized and dried in the drier 21. The drying temperature is lower than 200°C and the exhaust gas discharged from the firing furnace 22 in the next step may be utilized for the drying. Then, the dried mixed particles are transferred to the firing furnace 22 and fluidized and fired. The firing temperature is preferred to be up to 900°C since, if the temperature is higher than 900°C, the particles sinter and become bonded with one another. This hinders the flow of the particles from the firing furnace 22 and, further, the fluidizing of the particles stops. As the heating source for the firing furnace, use is made of the reaction heat obtained by burning a part of the gas discharged from the outlet 4 of the melt-reducing furnace 3 with air blown from an air blowing pipe 23. Then, the fired mixed particles are transferred into the preliminary reducing furnace 24 and a part of the gas discharged from the outlet 4 of the furnace 3 is directly blown into the preliminary reducing furnace 24 from a lower portion thereof and the particles are fluidized and partially reduced. The gas discharged from the furnace 3 consists of $CO$, $CO_2$, $H_2$, $H_2O$, $N_2$ and the like at a temperature of 600—1,500°C and the content of the reducing gases CO and $H_2$ is high. As the preliminary reduction ratio of the preliminarily reduced particles increases and the temperature of the particles fed into the melt-reducing furnace 3 increases, the melting of the particles in the furnace 3 becomes easier. The above described preliminary reduction ratio varies depending upon the kind of ore but said ratio is preferred to be about 40—80%.

The particles discharged from the preliminary reducing furnace 24 are charged into the melt-reducing furnace 3 through a feeding device 25 and mainly the tuyere 8. This feeding device 25 may be a mechanism wherein the preliminarily reduced particles are carried by a flow of $N_2$ or the gas evolved in the melt-reducing furnace. The melt-reduction in the melt-reducing furnace 3 occurs in the manner described with reference to Figure 1 but in order to make the refining reaction in the furnace 3 more smooth, it is possible to additionally add flux into the furnace 3, if necessary.

When the size of the particles granulated in the fluidizing granulating device is less than 3 mm, a gas carrying system can be used for transferring the particles between the respective steps, the amount of gas necessary for the fluidizing in the respective steps is small, and the reaction in the melt-reducing furnace proceeds quickly. Thus such a size is advantageous.

The production system shown in Figure 2 has the following merits.

(1) When, for example, difficultly soluble chromium ore is refined, melting is made easy and the reaction proceeds quickly by charging into the melt-reducing furnace preliminarily reduced particles in which powdery chromium ore and powdery flux are closely mixed.

(2) The gas generated in the melt-reducing furnace can be used in turn in the preliminary reduction, firing, drying and granulating steps.

In accordance with a second aspect of the invention, the carbonaceous solid reducing agent is in powder form and is fed into a preliminary treating furnace. A part of the high temperature gas generated in the vertical melt-reducing furnace is introduced into the above described preliminary treating furnace and the above described reducing agent is subjected to a preliminary treatment in which said agent is dried and heated while fluidizing. On the other hand, the powdery ore is charged into the preliminary reducing furnace and a part of the gases generated in the vertical melt-reducing furnace and a part or the whole of the gases generated in the preliminary treating furnace are introduced into the preliminary reducing furnace and the powdery ore is reduced while being fluidized. In addition, a high temperature gas containing oxygen is fed into the vertical melt-reducing furnace through a plurality of tuyeres provided at a lower portion of the furnace. The preliminarily reduced ore prepared in the preliminary reducing furnace and the preliminarily treated reducing agent heated in the preliminary treating furnace, and if necessary a flux, are fed into the vertical melt-reducing furnace where the preliminarily treated reducing agent is burnt in a fluidized state and the preliminarily reduced ore is melt-reduced by the heat and the reducing gas generated by this burning to obtain a molten metal and a molten slag. The molten metal is discharged from the furnace floor to the outside of the furnace.

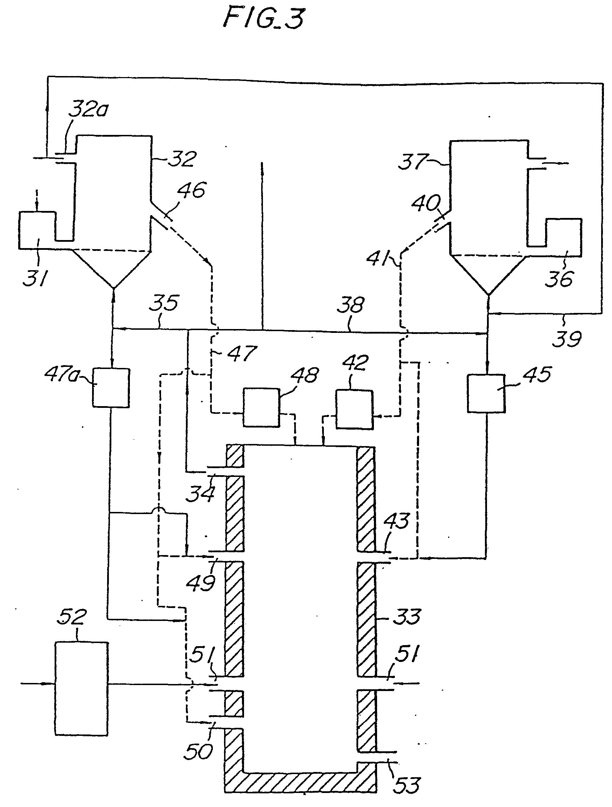

Figure 3 illustrates an embodiment of this second aspect of the present invention. In Figure 3 a powdery carbonaceous reducing agent is fed into a preliminary treating furnace 32 from a device 31 for feeding carbonaceous solid reducing agent and a part or the whole of the gas generated in a vertical melt-reducing furnace 33 is directly introduced into the preliminary treating furnace 32 through an outlet 34 and a pipe 35. The reducing agent is dried while being fluidized in the preliminary treating furnace 32 to effect a preliminary treatment in which the reducing agent is heated or carbonized to the necessary extent. For example, when powdery coal is used as the carbonaceous reducing agent, the coal is subjected to carbonization through the preliminary treatment in the preliminary treating furnace 32 to form powdery coke or char which is discharged from the furnace 32.

The powdery carbonaceous reducing agent may be directly fed into the vertical melt-reducing furnace 33 without using the preliminary treating furnace 32 but when carbonized gas containing hydrocarbons or tar is needed in the preliminary reducing furnace and other installations or when the reducing agent must be preheated in order to facilitate burning in the vertical melt-reducing furnace, it is particularly advantageous to preliminarily treat the reducing agent in the preliminary treating furnace 32.

On the other hand, the powdery ore containing metal oxides is fed into a preliminary treating furnace 37 from an ore feeding device 36 and a part or the whole of the gas generated from the vertical melt-reducing furnace 33 and/or a part or the whole of the gas generated from the preliminary treating furnace 32 are directly fed into the furnace 37 through pipes 38 and 39 and the powdery ore is desired, heated and preliminarily reduced to the desired extent while being fluidized in the furnace 37. The gas generated in the vertical melt-reducing furnace 33 is discharged at a high temperature of 900—1,500°C and includes $N_2$, CO, $CO_2$, $H_2$, $H_2O$ and the like and the content of the reducing gases CO and $H_2$ is high. The gas generated in the preliminary treating furnace 32, when coal is the starting material, includes $N_2$, CO, $CO_2$, $H_2$, $H_2O$, $C_nH_m$ (meaning hydrocarbons) and the like and the content of the reducing gases CO, $H_2$ or $C_nH_m$ is high. This gas is discharged at a temperature of 300—800°C from outlet 32a of the preliminary treating furnace 32. Accordingly, the powdery ore is preliminarily reduced while being fluidized in the preliminary reducing furnace 37. The preliminarily reduced ore is discharged in a highly heated condition from the preliminary reducing furnace 37 by means of a discharging device 40 and is tranferred to at least one of preliminarily reduced ore feeding devices 42 and 43, through a guide device 41, with a flux being added on the way if necessary, and charged into the vertical melt-reducing furnace 33. The preliminarily reduced ore is transferred with gas to the feeding device 43, which are in the form of tuyeres, and as the carrying gas, use is made of the gas generated from the vertical melt-reducing furnace 33 and, in some cases, it is advantageous to pressurize the carrying gas, by means of a pressurizing device 45, to facilitate the transfer of the preliminarily reduced ore.

The carbonaceous reducing agent treated in the preliminary treating furnace 32 is discharged from an outlet 46 and is fed into the vertical melt-reducing furnace 33 through at least one of feeding devices 48, 49 and 50 via guide device 47. The reducing agent is transferred to feeding devices 49 and 50, which are in the form of tuyeres, by means of gas generated in the vertical melt-reducing furnace 33. This gas may be pressurized, if necessary, by means of pressurizing device 47a. In the vertical melt-reducing furnace 33 the reducing agent is reacted with oxygen-containing gas having a high temperature, which is supplied from tuyeres 51 located below the upper tuyeres 43 and 49, and burnt therein, or contacted with metal oxides in the preliminarily reduced ore which has been fed into the vertical melt-reducing furnace 33 and melted therein whereby the metal oxide is reduced to form the metal.

As the oxygen-containing gas having a high temperature, use may be made of air or oxygen enriched air which is heated to a temperature of 800—1,300°C by means of a gas heating furnace 52, such as a hot air furnace.

Powdery carbonaceous solid reducing agent or powdery carbonaceous solid reducing agent treated in the preliminary treating furnace is burnt with the oxygen-containing gas at a high temperature at an upper zone above the position of the top of the tuyere 50 in the furnace 33, to evolve a high temperature and thereby the preliminarily reduced ore is heated, melted and reduced in this high temperature zone to form a molten metal and a molten slag, which are collected in two layers at the lower portion of the vertical melt-reducing furnace 33. The molten metal is timely discharged out of the furnace from an outlet 53.

In the present invention, as carbonaceous solid reducing agent supplied to the preliminary treating furnace 32, use may be made of powdery coke, char and coal either alone or in admixture. When coal is used, conventional inexpensive non-caking coal can be advantageously used and when lump coke is used, powdery coke prepared in the production of lump coke can be advantageously used.

It is necessary that the preliminarily reduced powdery ore supplied to the vertical melt-reducing furnace 33 is quickly melted and reduced in the high temperature zone in the vertical melt-reducing furnace 33 so it is advantageous, because the melt-reduction can thereby be easily effected, that the preliminarily reduced ore fed into the vertical melt-reducing furnace 33 is preheated to a high temperature and reduced to a high reduction ratio. The optimum preheating temperature and preliminary reduction ratio naturally vary depending upon the kind of metal oxide, the state of the ore containing the metal oxide and the system used but good results can be obtained when the preheating temperature and the preliminary reduction ratio are about 400—1,000°C and 40—80% respectively.

The oxygen-containing gas introduced through tuyeres 51 has a high temperature of 800—1,300°C and the furnace circumference around the inner end of the tuyere 50 is heated to a temperature of 2,000—2,500°C. The shape of the tuyere 51 may be made similar to the shape of the tuyere of an iron making blast furnace but in order to maintain the temperature of the molten metal pool on the furnace floor at 1,400—1,700°C, it is desirable that the inclined angle of the tuyere 51 projecting into the furnace is within a range of 40° downwardly from the horizontal so that the high temperature gas directly contacts the above described molten metal pool.

In order to maintain the vicinity of the inner end of the tuyere 50 at a high temperature of 2,000—2,500°C, an excess amount of oxygen should be supplied to the vicinity from the tuyere 51 as an oxygen-containing gas having a high temperature. However, although this results in the desired high temperature, the oxygen pressure in this vicinity is concurrently increased and therefore a reoxidation of the molten preliminarily reduced ore occurs and the concentration of iron oxide contained in the discharged slag increases and this is not desirable. In order to avoid such a disadvantage, it is possible to maintain the furnace in the vicinity around the tuyere at a high temperature and in a reducing atmosphere by directly supplying powdery reducing agent onto the molten slag surface from the tuyere 50 positioned below the tuyere 51 for feeding the oxygen-containing gas having a high temperature.

In accordance with a third aspect of the present invention, the vertical melt-reducing furnace is divided into upper and lower zones by a perforated plate and the powdery ore is fed into the upper zone which serves as the preliminary reducing furnace. The upper and lower inlets of the melt-reducing furnace are in the form of tuyeres and are provided in the lower zone. A reducing gas formed in the lower zone rises into the upper zone through the perforated plate and the powdery ore is dried, heated and reduced while being fluidized with this gas to the necessary degree. The gas rising into the upper zone through the perforated plate may be all or a part of the gas generated, in the lower zone. In certain cases, reducing gas or an inert gas may be suplied to the lower zone below the perforated plate from the outside to control the fluidized state of the ore or the temperature, component composition and the like of the fluidizing gas in the upper zone.

The gas generated in the lower zone includes $N_2$, $CO$, $CO_2$, $H_2$, $H_2O$, $C_mH_n$, etc. and, among these, the content of gases having a high reducibility, such as $CO$, $H_2$, $C_mH_n$, etc. is high. The temperature of the gas is 600—1,200°C and this gas is introduced into the upper zone through the perforated plate. The ore which has been subjected to the fluidizing preliminary reduction in the upper zone, overflows and is discharged at a high temperature from the upper zone through an outlet provided in the upper zone and blown, together with a flux and air or oxygen enriched air heated at a high temperature, into a bed of carbonaceous solid reducing agent through the upper of the inlets provided in the lower zone. The above described air or oxygen enriched air is heated at a temperature of 800—1,350°C in a gas heating furnace, such as a hot air furnace. Air or oxygen enriched air having a high temperature is blown also from the lower of the inlets into the lower zone. In the vicinity of the top ends of the upper and lower inlets the carbonaceous solid reducing agent forming the packed bed is burnt and a high temperature is evolved, so that the above described blown preliminarily reduced ore is heated and melted and directly reduced by the carbonaceous solid reducing agent whilst dropping down in the packed bed to form a molten metal and a molten slag, which are collected at the bottom of the lower zone. The molten metal is timely discharged out of the vertical furnace.

As the carbonaceous reducing agent lump coke is preferably used but lump coal, char, charcoal, etc. may be used either alone or in combination.

The height of the vertical melt-reducing furnace may be less than that of the usual iron making blast furnaces and it is not necessary to charge lump coke in alternate layers as the iron making blast furnace so that cokes having a high strength are not needed and hence expensive caking coal is not needed.

Unless the preliminarily reduced ore fed from the upper of the inlets is rapidly melted in the vicinity of the inlets, the ore cannot drop down to the bottom portion of the lower zone and this causes operating troubles. However these troubles can be prevented by blowing air of oxygen enriched air having a high temperature from the lower of the inlets in the lower zone. The preliminarily reduced ore blown from the upper of the inlets is oxidized by the oxygen and the heating and melting are promoted owing to the reaction heat. Accordingly, the melting becomes easier as the reduction ratio and preheating temperature of the preliminarily reduced ore increases. The optimum preliminary reduction ratio naturally varies according to the kind of ore and the system used but said ratio is preferred to be about 40—80%.

An apparatus for refining a metal oxide in accordance with this third aspect of the present invention comprises a vertical melting and reducing furnace, said furnace being divided by a perforated plate into an upper zone for carrying out a preliminary reduction of said ore in the fluidized state and a lower zone for melting and reducing the preliminarily reduced ore to form a molten metal, a molten slag and a reducing gas which rises up to the upper zone to effect the preliminary reduction; said lower zone being provided with an inlet for feeding a carbonaceous solid reducing agent, upper and lower inlets for blowing therein air or oxygen enriched air heated at elevated temperature, and an outlet for discharging the molten metal and the molten slag; and said upper zone being provided with an inlet for feeding said ore therein, an outlet to enable the preliminarily reduced ore to overflow from the upper zone and enter the lower zone via the upper of the inlets, and an outlet for discharging the exhaust gas generated in the preliminary reduction.

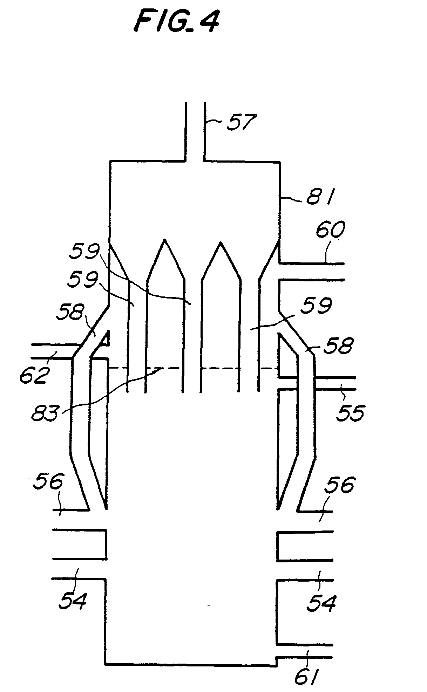

Figure 4 illustrates an embodiment of this third aspect of the present invention. In Figure 4, there is shown a vertical melt-reducing furnace 81 divided by a perforated plate 83 into an upper zone and a lower zone. The upper zone serves as a preliminary reducing furnace and is provided with a feeding device 62 for powdery ore and a guide device in the form of pipes 58 by which the powdery ore preliminarily reduced in the upper zone can overflow and be discharged in the fluidized state from the upper zone to the lower zone which serves as the melt-reducing furnace proper. The upper zone also has a further outlet 60 for the exhaust gas after the fluidizing reduction has been effected. This is in a relatively higher part of the upper zone.

In the lower zone, there is provided a plurality of inlets in the form of tuyeres 56 and 54 at an upper stage and a lower stage respectively. The tuyeres 56 in the upper stage are connected to the above described pipes 58. At a zone just below the perforated plate 83 at a relatively high portion of the lower zone, a device 55 for controlling the reducing gas generated in the lower zone may be provided, if necessary. A feeding device 57 for feeding carbonaceous reducing agent to the lower zone is provided and the lower portion of this feeding device 57 in the upper zone is branched to form branched tubes 59 and these branched tubes 59 penetrate the perforated plate 83 and terminate in the lower zone to form inlets for the reducing agent. An outlet 61 for discharging molten metal and molten slag is provided at the bottom of the lower zone.

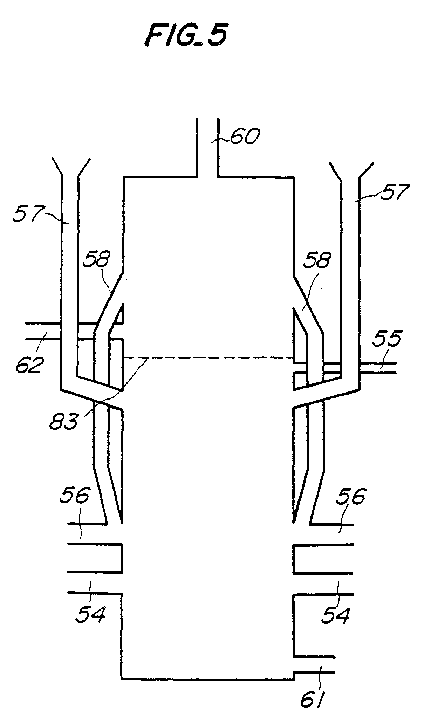

Figure 5 is an explanatory sectional view of another embodiment of the third aspect of the present invention and parts corresponding to parts of Figure 4 are denoted by like reference numerals.

The apparatus shown in Figure 5 is different from that in Figure 4 in that the carbonaceous reducing agent feeding device 57 does not penetrate the upper zone and the perforated plate 43. Rather it is located externally of the furnace so that it terminates at an inlet for the reducing agent and the reducing agent is directly fed to the lower zone from the outside of the furnace. Except for the feeding device 57, the other structure is quite the same as in Figure 4. According to the apparatus in Figure 4, the carbonaceous reducing agent fed through the feeding device 57 is preheated during its passage through the upper zone. This is thermally advantageous but the structure of the feeding device 57 becomes somewhat complicated and it is exposed to a high temperature so that its durability is less than in the apparatus shown in Figure 5. In Figure 5, the feeding device 57 is not exposed to high temperature, so that its durability is higher, but cold carbonaceous reducing agent is directly fed to the lower zone so that this apparatus is more thermally disadvantageous than that shown in Figure 4.

The apparatus of these embodiments are characterised in that the tuyeres 56 and 54 are provided at an upper stage and a lower stage, respectively. A large heat energy is needed for melting and further reducing

7

the preliminarily reduced ore and if the tuyeres 54 at the lower stage were not provided, even though the preliminarily reduced ore would be melted above the tuyere 56 at the upper stage, the zone below the tuyere 56 of the upper stage would be low in temperature and thus the reduction of the molten ore by the carbonaceous solid reducing agent would not be satisfactorily effected and the operation could not be continued due to the cooling down of the furnace. However, according to the present invention the cooling down of the lower portion of the furnace can be completely prevented since air or oxygen-enriched air at high temperature is introduced into the furnace through the tuyeres 54 at the lower stage to burn the carbonaceous reducing agent at the lower portion of the furnace.

In accordance with a fourth aspect of the present invention, the refining process is characterised in that a carbonization of the carbonaceous solid reducing agent is carried out during the first preliminary reducing step, whereby the exhaust gas and char which are the reaction products are used as a valuable recovered product and a reducing agent in the next melt-reducing step, respectively and the heat source is substantially supplied by a circulating gas obtained in the process of the invention itself.

Thus, this aspect lies in a method for melting and refining metal oxides in which the metal oxides are subjected to a preliminary reduction through a fluidizing reaction in the preliminary reducing furnace and the preliminarily reduced metal oxide is melt-reduced in the melt-reducing furnace wherein the preliminary reducing furnace is divided into an upper portion and a lower portion by a perforated plate, powdered carbonaceous solid reducing agent, metal oxides and a flux are charged into the upper portion, and a circulating reducing gas having a high temperature generated in this upper portion itself is fed into the lower portion of the furnace whereby a carbonization reaction of the carbonaceous reducing agent and a preliminary reduction of the metal oxide is effected to produce mixed particles of char, flux and metal oxide. The mixed particles prepared in the preliminary reducing furnace are introduced into the melt-reducing furnace via the upper of the inlets and are subjected to melt-reduction as a consequence of a combustion reaction caused between the above described char and a combustion supporting gas fed into the melt-reducing furnace to produce molten metal and molten slag. The gas generated in the upper portion of the preliminary reducing furnace is separated by means of a separator into tar and a hydrocarbon-containing fuel gas and said fuel gas is circulated and introduced, together with the high temperature gas generated in the melt-reducing furnace, into the preliminary reducing furnace.

An apparatus for refining a metal oxide in accordance with this fourth aspect of the invention comprises an apparatus for use in melting and refining a powdery or fine granular ore containing metal oxide which apparatus comprises (a) a preliminary reducing furnace divided by a perforated plate into an upper portion wherein carbonaceous solid reducing agent is carbonized to form char and said ore is preheated and preliminarily reduced and a lower portion wherein the preliminarily reduced ore, char and a flux are mixed, and (b) a vertical melting and reducing furnace wherein the preliminarily reduced mixed particles are melted and reduced through a combustion-fluidizing reaction with air or oxygen enriched air at elevated temperature to form molten metal and molten slag, said melting and reducing furnace having upper and lower inlets, a pipe being provided to convey said preliminary reduced mixed particles to the upper of the inlets; and a means being provided to introduce said air or oxygen enriched air via the lower of the inlets.

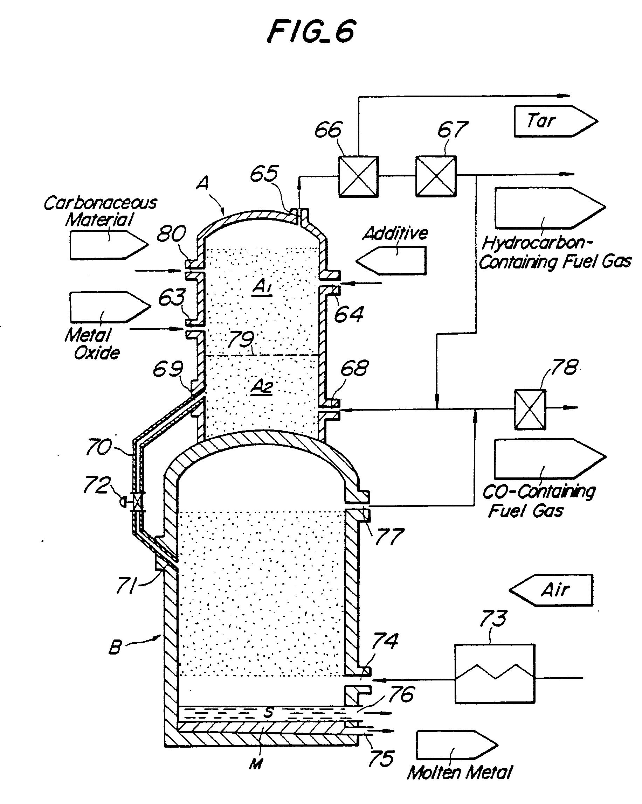

Figure 6 illustrates the dry-refining of metal oxides in accordance with this fourth aspect of the present invention.

In Figure 6, A is a carbonizing and preliminarily reducing furnace, which is divided into an upper chamber $A_1$ and a lower chamber $A_2$ by a perforated plate 79. Into the chamber $A_1$, powdery carbonaceous reducing agent, such as coal, is charged through an inlet 80, metal oxide ore is charged from an inlet 63 and reaction additives, such as a flux for the metal oxide and a desulfurizing agent for the carbonaceous reducing agent, are charged from an inlet 64. A reducing gas having a high temperature mentioned hereinafter is introduced into the lower chamber $A_2$ of the carbonizing and preliminary reducing furnace via inlet 68. As a result, when the reducing gas having a high temperature rises through the perforated plate 79, said gas contacts with the powdery carbonaceous reducing agent, metal oxide and additives and fluidizes these substances at a temperature range of 500—700°C which is suitable for the carbonization of the carbonaceous reducing agent. The carbonaceous reducing agent, such as a coal which is very easily caked, is mixed and quickly heated within a given temperature range and the carbonization reaction proceeds smoothly.

The carbonization of the carbonaceous reducing agent effectively occurs at about 500°C and the reaction efficiency is reduced at temperatures lower than 500°C. The carbonization can be effected at a reaction temperature higher than 700°C but the tar components of the carbonaceous reducing agent then volatilize and become gaseous so that, in order to effectively recover tar in a liquid state by a separator, the temperature is preferred to be lower than 700°C. If the reaction temperature becomes higher than 700°C, the liquid tar component is decomposed and the conversion rate into hydrocarbon gas increases.

The volatile matter in the carbonaceous reducing agent, when the carbonization is effected within the above described temperature range, evolves as a carbonized gas containing tar, hydrogen, methane and the like and this gas is taken out from an outlet 65 in the upper chamber $A_1$ and the liquid tar is separated and recovered in a separator 66 and the exhaust gas remaining is recovered through a purifying apparatus 67 including a desulfurizing apparatus. The recovered gas contains $H_2$, $CO$, $C_mH_n$ and the like and can be effectivley utilized as a clean fuel gas, a reducing gas for ore, or a starting gas to be used in chemical

8

industry. Of course, this gas can also be utilized as a source for heating air to a high temperature, which is supplied to the hereinafter mentioned melt-reducing furnace. The recovered tar is subjected to another purifying treatment and is used as a starting material in the chemical industry.

Furthermore, steam may be added to the reaction in the above described furnace.

The residue (i.e. char obtained in the carbonization of coal) obtained by removing the volatile matters through the above described carbonization in the upper chamber $A_1$ moves down to the lower chamber $A_2$ together with the flux and the metal oxide ore which has been preheated and preliminarily reduced while being fluidized with reducing gas and carbonised gas fed into furnace A *via* inlet 68. This preliminarily reduced metal oxide ore has a catalytic function with respect to the carbonization reaction of the carbonaceous reducing agent, such as coal, and the carbonization reaction smoothly proceeds at a high yield. Sulfur in the carbonaceous reducing agent transfers into the carbonized gas during the reaction in the carbonizing-preliminary reducing furnace, so that a powdery desulfurizing agent, such as lime, is supplied as an additive and by this means, sulfur in the carbonized gas is very effectively absorbed and therefore the role of the purifying apparatus 66 for treating the generated gas can be reduced.

Lime used as the desulfurizing agent in the reaction in the carbonizing-preliminary reducing furnace A may be effectively used as a component of the flux which renders the melting of the metal oxides easy. In this invention, the lime has a plurality of functions, one of which is to act as a flux which desulfurizes the exhaust carbonized gas in the upper chamber $A_1$ and makes the melting in the hereinafter mentioned vertical melt-reducing furnace B easy, and another of which is to catch sulfur in the char as a slag. The present invention is very effective as a method for utilizing lime.

As explained above, in the upper chamber of the carbonizing-preliminary reducing furnace, it is one of the characteristics of the present invention that the metal oxide ore, the carbonaceous reducing agent and the additives are concurrently fluidized within a temperature of 500—700°C.

As mentioned above, the powdery product having a temperature of 500—700°C formed in the carbonizing-preliminary reducing furnace A includes char, the preliminarily reduced metal oxide and the additives and is transferred into the lower chamber $A_2$ through the above described perforated separating plate 79. A part or the whole of the exhaust gas having a high temperature from the melt-reducing furnace B, if necessary mixed with a part of the exhaust gas discharged from the above described carbonizing-preliminary reducing furnace A, is introduced into the lower chamber $A_2$ through the inlet 68 and the powdery product transferred into the lower chamber $A_2$ is fluidized and preheated to a temperature of 800—1,200°C. When the reaction temperature in this furnace becomes higher than 1,200°C, ash matter in the carbonaceous material, such as coal, or a part of the preliminarily reduced metal oxide melts and sticks in many cases and causes trouble in the carbonizing-preliminary reducing furnace A. But in order to quickly carry out the melting and the reducing reaction in the melt-reducing furnace B, it is desirable that the preheating temperature in the carbonizing-preliminary reducing furnace A is high.

The gas introduced into the lower chamber $A_2$ for the preliminary reduction is a mixed gas having a high temperature consisting of carbon monoxide, mainly from the exhaust gas having a high temperature generated in the melt-reducing furnace B, and $H_2$ and $C_mH_n$ from the exhaust gas from the upper chamber $A_1$ of the carbonizing-preliminary reducing furnace A and the preliminary reduction of metal oxides proceeds, due to the strong reducing action of these substances, to a higher extent than does the reduction in the upper chamber and, for example, the reduction ratio reaches 40—80% according to the kind of metal oxide. In short, the reaction in the lower chamber $A_2$ utilises, in combination, the recovery of the sensible heat of the exhaust gas from the melt-reducing furnace B and the reducing ability of the exhaust gas from the upper chamber $A_1$.

The preliminarily reduced and preheated metal oxide, the flux and the char are thoroughly mixed and fed into the melt-reducing furnace B through an inlet 69, a pipe 70 and an upper inlet 71 for the preliminarily reduced product. In the pipe 70, there is provided a controlling device 72, such as a valve, for controlling the fed amount and said device is regulated according to the progress of the melt-reducing reaction.

The char preheated at 800—1,200°C which is transferred to the melt-reducing furnace B from the inlet 71 for the preliminarily reduced product is burnt by reaction with a combustion supporting gas, such as air heated to 800—1,300°C by being passed through an air heater 73 using exhaust gas obtained from the upper chamber $A_1$ as a heating source, and which is introduced from a tuyere 74 provided at the lower portion of the furnace whereby a fluidized bed of char having a high temperature of higher than 1,500°C is formed. Of course, if necessary, air specifically prepared by adding oxygen having a high purity may be used instead of air. The powdery metal oxide fed through the inlet 71, which has been preheated to a temperature of 800—1,200°C and preliminarily reduced to a reduction ratio of 40—80%, is instantaneously melted together with a very satisfactorily mixed powdery flux and is quickly and concurrently reduced by the char having a high temperature or by the carbon monoxide formed by the fluid-combustion of the char. As a result, molten metal and slag are formed and collected in the lower portion of the melt-reducing furnace B as shown by M and S in Figure 6. The molten metal and slag are discharged through outlets 75 and 76. According to the progress of the reaction in the melt-reducing furnace B, for example when a large amount of char is mixed in the collected slag, the reaction can be promoted by supplementing oxygen having a high purity or feeding a flux.

The gas generated by the fluid-combustion of char in the melt-reducing furnace B and the melt-reduction of the preliminarily reduced metal oxide is discharged through an outlet 77 but as mentioned above, a part or the whole of said gas is introduced into the above described carbonizing-preliminary reducing furnace A and the remainder is delivered to an exhaust gas treating device 78 including an exhaust heat recovering device and treated therein. The gas generated in the furnace B consists mainly of CO and $N_2$ and is effective as a part of the heat source of the air heater and further is valuable as a fuel gas and a starting gas for chemical industry.

The following Examples are given for the purpose of illustration of this invention and are not intended as limitations thereof.

Examples 1 and 2 concern the first aspect of the present invention.

## Example 1

This Example was carried out by following the method as described with reference to Figure 1.

| | | |
|---|---|---|
| 1) | Iron ore | MBR ore |
| | Grain size | less than 2 mm |
| | Supplied amount | 1,650 kg/hr |
| 2) | Carbonaceous solid reducing agent Kind | |
| | Grain size | coke |
| | Supplied amount | 25—75 mm |
| | | 660 kg/hr |
| 3) | Amount of air blown into the vertical furnace | |
| | Blown air temperature | 1,500 Nm³/hr |
| | Number of air blowing tuyeres | 900°C |
| | i.e. 4 in each of the lower and upper stages (The preliminarily reduced product was fed into the 4 tuyeres in the upper stage) | Total 8 |
| | Preliminary reduction ratio | 71% |
| 4) | Amount of pig iron produced | 1,100 kg/hr |
| 5) | Amount of slag formed | 220 kg/hr |

## Example 2

This Example was carried out by following the method as described with reference to Figure 2.

| | | |
|---|---|---|
| 1) | Granulation in the granulating device. | |
| | Iron ore | MBR ore |
| | Grain size | less than 1 mm |
| | Supplied amount | 1,580 kg/hr |
| | Limestone: | |
| | Grain size | less than 100 mesh |
| | Supplied amount | 280 kg/hr |
| | Silica: | |
| | Grain size | less than 100 mesh |
| | Supplied amount | 80 kg/hr |
| | Bentonite | 2% addition |
| | Grain size after granulation | 2 mm |
| 2) | Drying and firing: | |
| | Drying temperature | 150°C |
| | Firing temperature | 900°C |
| 3) | Preliminary reduction: | |
| | Reducing temperature | 900°C |
| | Reduction ratio | 65% |
| 4) | Melt-reducing furnace: | |
| | Amount of pig iron produced | 1,080 kg/hr |
| | Amount of slag formed | 350 kg/hr |

According to this first aspect of the present invention, low caking or non-caking coals having a relatively low cost can be used without using expensive electric power and caking coals, and the reducing gas discharged from the melt-reducing furnace can be effectively used for the preliminary reduction of the ore. This aspect of the present invention is expected to be used as an advantageous method for refining metal oxides.

Example 3

The Example concerns the second aspect of the present invention and was carried out by following the method described with reference to Figure 3.

| 1) | Iron ore | MBR ore |
| | Grain size | less than 2 mm |
| | Supplied amount | 2,610 kg/hr |

| 2) | Carbonaceous solid reducing agent fed into the preliminary treating furnace: | |
| | Kind | non-caking coal (F.C.: 74.8%) |
| | Grain size | less than 3 mm |
| | Supplied amount | 1,100 kg/hr |

| 3) | Amount of air blown into the vertical furnace | 2,350 Nm³/hr |
| | Blown air temperature | 900°C |

| 4) | Preliminary reduction ratio | 71% |

| 5) | Amount of pig iron produced | 1,710 kg/hr |

| 6) | Amount of slag formed | 364 kg/hr |

The following advantages are obtained by operating in accordance with the first and second aspects of the present invention:—

(1) Since powdery ore can be directly used without effecting a lump-forming step, the energy and expense involved in lump formation are not required and no counter-measures to deal with NOx, SOx and dusts formed during lump formation are needed.

(2) The gas evolved in the vertical reducing furnace (and the gas evolved in the preliminary treating furnace) is used for preliminarily reducing the ore so that additional equipment for preparing the reducing gas is not specifically needed.

(3) A preliminarily reduced ore having a reduction ratio of 40—80%, which can be relatively easily obtained, can be produced without hindrance.

(4) Inexpensive carbonaceous solid reducing agent can be used as the heat source and, when non-caking coal powder is used, tar and a hydrocarbon-containing gas having very high reducing properties can be obtained.

(5) The gas blown into the melt-reducing furnace is mainly preheated air and expensive oxygen is not necessarily needed.

(6) The pretreatment, the preliminary reduction and the melt-reduction are carried out in the fluidized state, so that there is less limitation on the place where the preliminarily reduced ore is fed to the vertical melt-reducing furnace and the melting and the reduction may be easily carried out.

In the above Examples, iron ore was used but other ores such as nickel ore, manganese ore, and chromium ore may be used as the starting material for carrying out the present invention.

Example 4

This Example concerns the third aspect of the present invention and was carried out by following the method described with reference to Figure 4.

| 1) | Iron ore | MBR ore |
| | Grain size | less than 2 mm |
| | Supplied amount | 3,499 kg/hr |

| 2) | Solid reducing agent: | |
| | Kind | coke |
| | Grain size | average 45 mm |
| | Supplied amount | 1,488 kg/hr |

| 3) | Amount of air blown into the vertical furnace | 3,150 Nm³/hr |
| | Blown air temperature | 900°C |

| 4) | Preliminary reduction ratio | 71% |

| 5) | Amount of pig iron produced | 2,299 kg/hr |

| 6) | Amount of slag formed | 488 kg/hr |

11

The following advantages are obtained by operating in accordance with the third aspect of the present invention.

(1) Powdery ores or metal oxides can be used without having to form them into lumps with a consequent saving in energy and auxiliary materials for the lump formation and the need to deal with the resultant NOx, SOx and dusts.

(2) The gas evolved from the coke packed bed can be used as the preliminary reducing gas, so that no additional equipment for preparing the reducing gas is needed.

(3) A high preliminary reduction ratio is not needed and thus the preliminary reduction is easy and a high gas utility is attained.

(4) The preliminarily reduced metal oxide ore is in powdered form and is subjected to the melt-reduction as such and thus it is not necessary to form it into lumps such as briquets.

(5) In the melt-reduction, expensive electric power is not necessary and sufficient heat energy can be supplied by combustion of the solid reducing agent with oxygen using two stages of tuyeres.

(6) No coke having a high strength, as in the iron making blast furnace, is needed and thus expensive caking coal, of which the sources are few, is not necessary.

(7) By providing a fluidized bed in the upper portion of the coke packed bed, the sensible heat of the gas evolved in the coke packed bed can be effectively utilized.

(8) The feeding of the preliminarily reduced product to the tuyeres at the upper stage is effected by overflow from the upper portion of the fluidized bed and thus the feeding is very easy and the pressurizing of gas is not necessary.

## Example 5

This example concerns the fourth aspect of the present invention and was carried out by following the method described with reference to Figure 6.

| | | |
|---|---|---|
| (1) | Powdery iron ore | MBR ore |
| | Composition | |
| | T.Fe | 65% |
| | FeO | 0.6% |
| | Gangue mineral | 3% |
| | Grain size | less than 2 mm |
| | Supplied amount | 748 kg/hr |
| | | |
| (2) | Carbonaceous reducing agent: | |
| | Composition | |
| | F.C. | 58% |
| | V.M. | 36% |
| | Gangue mineral | 7% |
| | Grain size | less than 2 mm |
| | Supplied amount | 421 kg/hr |
| | | |
| (3) | Additives: | |
| | Lime | 60 kg/hr |
| | Silica | 11 kg/hr |
| | Grain size | less than 1 mm |
| | | |
| (4) | Steam | 32 kg/hr |
| | | |
| (5) | Upper chamber | |
| | Reaction temperature | 610°C |
| | Pressure | 0.2 kg/cm$^2$G |
| | Lower chamber | |
| | Reaction temperature | 1,100°C |
| | Pressure | 0.5 kg/cm$^2$G |
| | | |
| (6) | Preliminary reduction ratio | 61% |
| | | |
| (7) | Amount of gas evolved | 902 m$^3$/hr |
| | Generated heat energy | 1,135 KCal/m$^3$ |
| | Gas component | |

$H_2$:1%,  CO:25%,
$CH_4$:1%,  $CO_2$ 18%,
$C_mH_n$:1%,  $N_2$:54%

(8) Amount of tar formed      44 kg/hr

Melt-reducing furnace
(1)   Amount of air supplied                     603 m³/hr (temperature 980°C)

(2)   Amount of pig iron produced                487 kg/hr

(3)   Amount of slag formed                      170 kg/hr

The following advantages are obtained by operating in accordance with the fourth aspect of the present invention.

(1) Powdery ores or metal oxides can be used without having to form them into lumps. Thus there is a saving in the energy and auxiliary materials which would be required for the lump formation and in dealing with the NOx, SOx and dusts which would have been produced during the lump formation.

(2) As the preliminary reducing gas, a high temperature gas evolved in the melt-reducing furnace and the gas evolved in the carbonizing preliminary reducing furnace are utilized, so that no additional equipment for producing the reducing gas is needed.

(3) Powdery iron or other metal oxide ore preliminarily reduced in the first furnace is subjected to melt-reduction in the second furnace, so that a step for forming the same into lumps, such as briquets, is not necessary.

(4) The carbonaceous reducing agent may be inexpensive non-caking coal and thus expensive caking coal is not needed. Also, lump coke having a high strength, as used in iron making blast furnaces, is not necessary.

(5) In the upper chamber of the carbonizing-preliminary reducing furnace, the following three phenomena concurrently proceed viz.
(a) carbonization and gas formation of the carbonaceous reducing agent,
(b) preliminary reduction of the metal oxide, and
(c) mixing with the additives,
and the preliminarily reduced metal oxide serves as a catalyst for the carbonization of the carbonaceous reducing agent, so that the carbonization reaction proceeds smoothly. The present invention efficiently utilizes these phenomena. The melting and reducing reaction in the melt-reducing furnace B smoothly proceeds in the presence of a flux and the flux is thoroughly mixed with the preliminarily reduced ore particles and char by means of the upper and lower chambers of the carbonizing-preliminary reducing furnace A and the resulting mixture is supplied into the melt-reducing furnace in the preheated state, so that the reaction efficiency is high.

(6) The additives, such as lime have three functions, that is the function of a desulfurizing agent for the carbonized gas evolved from the carbonaceous reducing agent, the function as a flux by which the melting in the melt-reducing furnace B is made easy, and the function as a binding agent for sulfur, in the metal oxide and char.

(7) The carbonizing-preliminary reducing furnace A is separated into two chambers by a perforated plate. In the upper chamber, the carbonization of the carbonaceous reducing agent is efficiently carried out while maintaining a high yield of liquid tar at 500—700°C. In the lower chamber, the preheating and the preliminary reduction are satisfactorily effected in order to maintain a high temperature in the melt-reducing furnace B. These functions in the upper and lower chambers are fully attained.

(8) The thoroughly mixed, preheated and preliminarily reduced ore instantaneously melts and becomes reduced in the fluidized bed of char at high temperature to produce molten metal and molten slag.

(9) A fuel gas containing a liquid tar, hydrogen and hydrocarbons, and a fuel gas containing carbon monoxide can be produced from carbonaceous reducing agents such as coal. The molten metal can be produced by using such high energy fuel gases without using electric power and oxygen.

**Claims**

1. A method of melting and refining a powdery or fine granular ore containing metal oxide comprising
(1) charging said ore and a reducing gas into a fluidized bed type of preliminary reducing furnace to preliminarily reduce said ore therein, said reducing gas being a gas at elevated temperature generated in a vertical melting and reducing furnace containing a packed bed or fluidized bed of carbonaceous solid reducing agent,
(2) charging the preliminarily reduced ore heated at a high temperature into said melting and reducing furnace,
(3) introducing air or oxygen-enriched air at elevated temperature into said melting and reducing furnace at a position higher than the surface of the molten metal and molten slag collected at the bottom of the furnace so that said ore is melted and reduced by said carbonaceous solid reducing agent and air or oxygen-enriched air, and
(4) discharging molten metal and molten slag from the melting and reducing furnace, characterised in that said melting and reducing furnace includes upper and lower inlets, preliminarily reduced ore being

13

introduced *via* at least the upper of the inlets and air or oxygen enriched air being introduced *via* at least the lower of the inlets.

2. A method in accordance with claim 1 wherein said air or oxygen-enriched air is introduced into the melting and reducing furnace at a temperature of at least 800°C.

3. A method in accordance with claim 1 or 2, wherein said carbonaceous solid reducing agent is in the form of a packed bed and said upper and lower inlets are in the form of tuyures located in the lower portion of said melting and reducing furnace, said preliminarily reduced ore and, if necessary, a flux being introduced into said melting and reducing furnace from at least the upper tuyeres together with air or oxygen-enriched air at elevated temperature.

4. A method in accordance with claim 3 wherein said preliminarily reduced ore is produced by the following steps:

(a) fluidizing and granulating said ore and a powdery flux by means of an exhaust gas generated in step (b) while spraying water thereon to prepare green mixed particles of the ore and the flux,

(b) transferring the green mixed particles into a drying furnace and fluidizing and drying said particles therein by means of an exhaust gas generated in step (c),

(c) transferring the dried mixed particles into a firing furnace and firing said particles therein by means of part of said reducing gas generated in said vertical melting and reducing furnace, and

(d) transferring the fired mixed particles into said preliminary reducing furnace and fluidizing and preliminarily reducing said particles therein by means of another part of said reducing gas generated in said vertical melting and reducing furnace.

5. A method in accordance with claim 1 or 2 wherein said carbonaceous solid reducing agent is in the form of a fluidized bed and said melting and reducing furnace includes an additional inlet below said lower of the inlets but above the molten metal, said preliminarily reduced ore being introduced into the vertical melting and reducing furnace in combination with a flux and carbonaceous solid reducing agent being introduced into the vertical melting and reducing furnace *via* said additional inlet.

6. A method in accordance with claim 5, wherein said carbonaceous solid reducing agent is prepared by carbonizing powdery coal in a preliminary treating furnace using reducing gas generated from the vertical melting and reducing furnace.

7. A method in accordance with claim 6, wherein a part or the whole of the gas generated in the preliminary treating furnace is fed into the preliminary reducing furnace.

8. A method in accordance with claim 1 or 2 wherein the vertical melting and reducing furnace is divided by a perforated plate, into a lower zone and an upper zone, said upper and lower inlets are located in the lower zone, the upper zone constitutes the preliminary reducing furnace, and the perforated plate allows the reducing gas generated in the lower zone to enter the upper zone and fluidise and preliminarily reduce the ore therein, the method including the step of introducing the preliminarily reduced ore together with a flux and air or oxygen enriched air heated at elevated temperature into the lower zone *via* said upper of the inlets.

9. A method in accordance with claim 1 or 2 wherein the preliminary reducing furnace is divided by a perforated plate into an upper portion and a lower portion which method comprises charging said carbonaceous solid reducing agent in powder form, said ore and a powdery flux into the upper portion of the preliminary reducing furnace, introducing said reducing gas into the lower portion of the preliminary reducing furnace to cause carbonization of the carbonaceous solid reducing agent and preliminary reduction of said ore to form mixed particles of char, flux and preliminarily reduced ore, feeding the thus formed mixed particles to the upper of the inlets of said vertical melting and reducing furnace together with air or oxygen enriched rich air heated at elevated temperature, separating the gas generated in the preliminary reducing furnace into tar and a hydrocarbon-containing fuel gas, and introducing the fuel gas together with said reducing gas into the preliminary reducing furnace.

10. An apparatus for use in melting and refining a powdery or fine granular ore containing metal oxide in accordance with the method of claim 8, which apparatus comprises a vertical melting and reducing furnace, said furnace being divided by a perforated plate into an upper zone for carrying out a preliminary reduction of said ore in the fluidised state and a lower zone for melting and reducing the preliminarily reduced ore to form a molten metal, a molten slag and a reducing gas which rises up to the upper zone to effect the preliminary reduction; said lower zone being provided with an inlet for feeding a carbonaceous solid reducing agent, upper and lower inlets for blowing therein air or oxygen enriched air heated at elevated temperature, and an outlet for discharging the molten metal and the molten slag; and said upper zone being provided with an inlet for feeding said ore therein, an outlet to enable the preliminarily reduced ore to overflow from the upper zone and enter the lower zone *via* the upper of the inlets, and an outlet for discharging the exhaust gas generated in the preliminary reduction.

11. An apparatus as claimed in claim 10, which includes a device for feeding the carbonaceous solid reducing agent, which device penetrates the upper zone and the perforated plate and terminates in said lower zone to form said inlet for feeding said carbonaceous solid reducing agent.

12. An apparatus as claimed in claim 10 which includes a device for feeding the carbonaceous solid reducing agent, which device is located externally of said melting and reducing furnace and terminates at said inlet for feeding carbonaceous solid reducing agent so that said carbonaceous solid reducing agent is directly fed from the outside of said melting and reducing furnace.

13. An apparatus for use in melting and refining a powdery or fine granular ore containing metal oxide in accordance with the method of claim 9 which apparatus comprises (a) a preliminary reducing furnace divided by a perforated plate into an upper portion wherein carbonaceous solid reducing agent is carbonized to form char and said ore is preheated and preliminarily reduced and a lower portion wherein the preliminarily reduced ore, char and a flux are mixed, and (b) a vertical melting and reducing furnace wherein the preliminarily reduced mixed particles are melted and reduced through a combustion-fluidizing reaction with air or oxygen enriched air at elevated temperature to form molten metal and molten slag, said melting and reducing furnace having upper and lower inlets, a pipe being provided to convey said preliminarily reduced mixed particles to the upper of the inlets; and a means being provided to introduce said air or oxygen enriched air *via* the lower of the inlets.

**Patentansprüche**

1. Verfahren zum Schmelzen und Frischen eines pulverartigen oder feinkörnigen, Metalloxyd enthaltenden Erzes, wobei folgende Schritte vorgesehen sind:

(1) Einbringen des Erzes und eines Reduktionsgases in einen Vorreduzierofen des Wirbelbett-Typs, um das Erz dort einer Vorreduktion zu unterziehen, wobei das Reduktionsgas ein Gas erhöhter Temperatur ist, das in einem veritaklen Schemlz- und Reduktionsofen, der ein Packungsbett oder Wirbelbett eines kohlenstoffhaltigen Festkörperreduziermittels enthält, erzeugt wird,

(2) Einbringen des einer Vorreduktion unterzogenen Erzes in auf eine hohe Temperatur erhitztem Zustand in den Schmelz- und Reduktionsofen,

(3) Einführen von Luft oder mit Sauerstoff angereicherter Luft bei erhöhter Temperatur in den Schmelz, und Reduktionsofen an einer höher als die Oberfläche des geschmolzenen Metalls und der geschmolzenen Schlacke, die sich am Boden des Ofens sammelt, gelegenen Position, so daß das Erz geschmolzen und durch das kohlenstoffhaltige Festkörperreduziermittel und die Luft oder die mit Sauerstoff angereicherte Luft einer Reduktion unterzogen wird, und

(4) Ablassen von geschmolzenem Metall und geschmolzener Schlacke au dem Schmelz- und Reduktionsofen, dadurch gekennzeichnet, daß der Schmelz- und Reduktionsofen obere und untere Einlaßöffnungen aufweist, wobei das einer Vorreduktion unterzogene Erz über zumindest die obere der Einlaßöffnungen und die Luft oder die mit Sauerstoff angereicherte Luft über zumindest die untere der Einlaßöffnungen eingeführt werden.

2. Verfahren nach Anspruch 1, dadurch gekennzeichnet, daß die Luft oder mit Sauerstoff angereicherte Luft bei einer Temperatur von zumindest 800°C in den Schmelz- und Reduktionsofen eingeführt wird.

3. Verfahren nach Anspruch 1 oder 2, dadurch gekennzeichnet, daß das kohlenstoffhatlige Festkörperreduziermittel in der Form eines Packungsbetts vorliegt und daß die oberen und unteren Einlaßöffnungen in Form von Düsen im unteren Einläßöffnungen in Form von Düsen im unteren Bereich des Schmelz- und Reduktionsofens vorgesehen sind, wobei das vorreduzierte Erz und, falls erforderlich, ein Flußmittel zusammen mit Luft oder mit Sauersstoff angereicherter Luft bei erhöhter Temperatur über zumindest die oberen Düsen in den Schmelz- und Reduktionsofen eingebracht werden.

4. Verfahren nach Anspruch 3, dadurch gekennzeichnet, daß das einer Vorreduktions unterzogene Erz in folgenden Schritten hergestellt wird;

(a) Fluidisierung und Granulierung des Erzes und eines pulverförmigen Flußmittels mittels eine Abgases, das gemäß Schritt (b) erzeugt wird, wobei gleichzeitig Wasser aufgesprüht wird, um eine feuchte Teilchenmi-schung aus Erz und Fußmittel zu bereiten,

(b) Einführen der feuchten Teilchenmischung in einen Trockenofen, in welchem die Teilchen mittels eines Abgases, das gemäß Schritt (c) erzeugt wird, fluidisiert und getrocknet werden,

(c) Einführen der gretrockneten Teilchenmischng in einen Brennofen, in welchem die Teilchen mittels eines Teils des Reduktionsgases, welches im vertikalen Schmelz- und Reduktionsofen erzeugt wird, gebrannt werden, und

(d) Einführen der gebrannten Teilchenmischung in den Vorreduktionsofen, in welchem die Teilchen mittels eines anderen Teils des Redktionsgases, welches im vetikalen Schmelz- und Reduktionsofen erzeugt wird, einer Fluidisierung und Vorreduktion unterzogen werden.

5. Verfahren nach Anspruch 1 oder 2, dadurch gekenneichnet, daß das kohlenstoffhaltige Festkörperreduziermittel in Form eines Wirbelbetts vorliegt und daß der Schmwlz- und Reduktionsofen unterhalb der unteren Einlaßöffnungen aber oberhalb des geschmolzenen Metalls eine zusätzliche Einlaßöffnung aufweist, wobei das einer Vorreduktions unterzogene Erz zusammen mit einem Flußmittel und kohlenstoffhaltigem Festkörpereduktionsmittel über die zusätzliche Einlaßöffnung in den vertikalen Schmelz- und Reduktionsofen eingeführt werden.

6. Verfahren nach Anspruch 5, dadurch gekennzeichnet, daß das kohlenstoffhaltige Festkörperreduktionsmittel durch Karbonisierung pulverförmiger Kohle in einem Vorbehandlungsofen unter Verwendung von im vertikalen Schmelz- und Reduktionsofen erzeugtem Reduktionsgas hergestellt wird.

7. Verfahren nach Anspruch 6, dadurch gekennzeichnet, daß ein Teil oder die Gesamtheit des Gases, das im Vorbehandlungsofen erzeugt wird, in den Vorreduktionsofen eingeführt wird.

8. Verfahren nach Anspruch 1 oder 2, wobei der vertikale Schmelz- und Reduktionsofen durch eine perforierte Platte in eine untere Zone und eine obere Zone unterteilt ist, wobei die genantten oberen und unteren Einlaßöffnungen im Bereich der unteren Zone angeordnet sind, wobei die obere Zone den Vorreduktionsofen bil-det und wobei die perforierte Platte es dem in der unteren Zone erzeugten Reduktionsgas erlaubt, in die obere Zone einzutreten und das hierin enthaltene Erz zu fluidisieren und einer Vorreduktion zu unterziehen, mit dem Schritt, daß das einer Vorreduktion unterzogene Erz zusammen mit einem Flußmittel und Luft oder mit Sauerstoff angereicherter luft erhöhter Temperatur über die oberen Einlaßöffnungen in die untere Zone einegebracht wird.

9. Verfahren nach Anspruch 1 oder 2, wobei der Vorreduktionsofen durch eine perforierte Platte in einen oberen und einen unteren Bereich unterteilt ist, mit folgenden Schritten: Einbringen des kohlenstoffhaltigen Festkörperreduktionsmittels in pulverförmiger Form, des Erzes und eines pulverförmigen Flußmittels in den oberen Bereich des Vorreduktionsofens, Einbringen des Redutionsgases in des unteren Bereich des Reduktionsofens, un eine Karbonisierung des kohlenstoffhaltigen Festkörperreduktionsmittels und eine vorreduktions des Erzes zu bewirken, um eine Teilchenmischung von Kohle, Flußmittel und vorreduziertem Erz zu bilden, wobei die so gebildete Teilchemischung den oberen Einlaßöffnungen des vertikalen Schmelz- und Reduktionsofens zusammen mit Luft oder mit Sauerstoff angereicherter Luft erhöhter Temperatur zugeführt wird, wobei das im vorreduktionsofen erzeugte Gas in Teer und in ein Kohlenwasserstoff enthaltendes Brenngas separiert wird und wobei das Brenngas zusammen mit dem Reduktionsgas in den Vorreduktionsofen eingeführt wird.

10. Vorrichtung zum Schmelzen und Frischen eines pulverförmigen oder feinkörnigen, Metalloxyd enthaltenden Erzes gemäß Anspruch 8, mit einem vertikalen Schmelz- und Reduktionsofen, der durch eine perforierte Platte in eine obere Zone zur Durchführung einer Vorreduktion des Erzdes in fluidisiertem Zustand und in eine untere Zone zum Schmelzen und Reduzieren des einer Vorreduktion unterzogenen Erzes unterteilt ist, wobei eine Metallschmelze, geschmolzene Schlacke und Reduktionsgas, die in die obere Zone aufsteigt um eine Vorreduktion zu bewirken, gebildet werden; wobei die untere Zone mit einem Einlaß zum Zuführen eines kohlenstoffhaltigen Festkörperreduziermittels, oberen und unteren Einlaßöffnungen zum Einblasen von Luft oder mit Sauerstoff angereicherter Luft erhöhter Temperatur in das Festkörperreduktionsmittel und mit einem Auslaß zum Ablassen der Metallschmelze und der geschmolzenen Schlacke versehen ist; und wobei die obere Zone it einem Einlaß zum Zuführen des Erzes, einem Auslaß zum Überströmen des vorreduzierten Erzes von der oberen Zone zur unteren Zone, in welche es über die oberen Einlaßöffnungen eintritt, und mit einem Auslaß zum Ablassen des Abgases, das bei der Vorreduktion erzeugt wurde, versehen ist.

11. Vorrichtung nach Anspruch 10, gekennzeichnet durch eine Einrichtung zum Zuführen des kohlenstoffhaltigen Festkörperreduziermittels, die die obere Zone und die perforierte Platte durchsetzt und in der unteren Zone endet und dabei den Einluß zum Zuführen des kohlenstoffhaltigen Festkörperreductionsmittels bildet.

12. Vorrichtung nach Anspruch 10, gekennzeichnet durch eine Einrichtung zum Zuführen des kohlenstoffhaltigen Festokörperreduktionsmittels, welche außerhalb des Schmelz- und Reduktionsofens angeordnet ist und im Bereich der Einlaßöffnung für das kohlenstoffhaltige Festkörperreduziermittel endet, so daß kohlenstoffhaltiges Festkörperreduziermittel direkt von außerhalb des Schmelz- und Reduktionsofens zugeführt wird.

13. Vorrichtung zum Schmelzen und Frischen eines pulverförmigen oder feinkörnigen, Metalloxyd enthaltenden Ezes nach Verfahren gemäß Anspruch 9, gekennzeichnet durch

(a) einen Vorreduktionsofen der durch eine perforierte Platte in einen oberen Bereich, in welchem kohlenstoffhaltiges Festkörperreduktionsmittel karbonisiert wird, um karbonisiertes Material zu bilden und in welchem das Erz vorerhitzt und einer Vorreduktion unterzogen wird, und in einen unteren Bereich iunterteilt ist, in welchem das vorreduzierte Erz, das korbinisierte Mateiral und ein Flußmittel gemischt werden, und

(b) durch einen vertikalen Schmelz- und Reduktionsofen, in welchem die einer Vorreduktion unterzogene Teilchenmischung geschmolzen und durch eine Verbrennungs- Fluidisierungsreaktion mit Luft oder mit Sauerstoff angreicherter Luft erhöhter Temperatur reduziert wird, um eine Metallschmelze und geschmolzene Schlacke zu bilden, wobei der Schmelz- und Reduktionsofen obere untere Einlaßöffnungen aufweist und eine Rohrleitung vorgesehen ist, um die einer Vorreduktion unterzogene Teilchenmischung zur obersten Einlaßöffnung zu transportieren; und wobei Mittel zum Einführen von Luft oder mit Sauerstoff angereicherter Luft über die unterste Einlaßöffnung vorgesehen sind.

## Revendications

1. Procédé pour fondre et affiner un minerai pulvérulant ou sous forme de grains fins, contenant un oxyde métallique consistant à:

(1) charger ledit minerai et un gaz réducteur dans un four de pré-réduction du type à lit fluidisé pour soumettre ledit minerai à une pré-réductions dans ce four, ledit gaz réducteur étant un gaz à haute température produit dans un four de fusion et réduction vertical comportant un lit formé par empilement ou un lit fluidisé d'un agent réducteur solide carboné;

16

(2) charger le minerai pré-réduit chauffé à une température élevée, dans ledit four de fusion et de réducation;

(3) introduire de l'air ou de l'air enrichi en oxygène à une température élevée dans ledit four de fusion et de réduction, à une position supérieure à la surface du métal liquide et du laitier fondu collectés au bas de four de manière que ledit minerai soit fondu et réduit par ledit agent réducteur solide carboné et par l'air ou l'air enrichi en oxygène, et

(4) décharger le métal liquide et le laitier liquid du four de fusion et de réduction, caractérisé en ce que ledit four de fusion et de réduction comprend des entrées supérieures et inférieures, le minerai préréduit étant introduit par l'intermédiaire des entrées situées le plus haut au moins et de l'air, ou de l'air enrichi en oxygène, étant introduit par l'intermédiaire des entrées situées le plus bas au moins.

2. Procédé selon la revendication 1, dans lequel ledit air ou l'air enrichi en oxygène est introduit dans le four de fusion et de réduction à une température d'au moins 800°C.

3. Procédé selon la revendication 1 ou 2, dans lequel ledit agent réducteur solide carboné est sous forme d'un lit constitué par empilement et lesdites entrées supérieures et inférieures sont réalisées sous la forme de tuyères placées dans la partie inférieures dudit four de fusion et de réduction, ledit minerai pré-réduit et, si nécessaire, un fondant, étant introduits dans ledit four de fusion et de réduction par les tuyères supérieures, au moins, conjointement avec de l'air ou de l'air enrichi en oxygène à haute température.

4. Procédé selon la revendication 3, dans lequel ledit minerai pré-réduit est produit par les phases suivantes:

a) fluidisation et granulation dudit minerai et d'un fondant pulvérulent au moyen d'un gaz d'échappement engendré dans la phase b), en même temps qu'on pulverise de l'eau sur ce minerai et ce fondant, pour préparer des particules mixtes crues du minerai et du fondant;

b) transfert des particules mixtes crues dans le four de séchage et fluidisation et séchage desdites particules dans ce four au moyen d'un gaz d'échappement engendré dans la phase (c);

c) transfert des particules mixtes séchées dans un four de cuisson et cuisson desdites particules au moyen d'une partie dudit gaz réducteur produit dans ledit four de fusion et de réduction vertical; et

d) transfert des particules mixtes cuites dans ledit four de pré-réduction et fluidisation et pré-réduction desdites particules dans ce four au moyen d'une autre partie dudit gas réducteur engendré dans ledit four de fusion et de réduction vertical.

5. Procédé selon la revendication 1 ou de la revendication 2, dans lequel ledit agent réducteur solide carboné est sous la forme d'un lit fluidisé et ledit four de fusion et de réduction comprend une entrée additionnelle située au-dessous desdites entrées les plus basses mais au-dessus du métal fondu, ledit minerai préréduit étant introduit dans le four de fusion et de réduction vertical en combinaison avec un fondant cependant qu'un agent réducteur solide carboné est introduit dans le four de fusion et de réduction vertical par ladit entrée additionnelle.

6. Procédé selon la revendication 5, dans lequel ledit agent réducteur solide carboné est préparé en carbonisant un charbon pulvérulent dans un four de traitement préliminaire au moyen d'un gaz réducteur provenant du four de fusion et de réduction vertical.

7. Procédé selon la revendication 6, dans lequel une partie ou la totalité du gaz engendré dans le four de traitement préliminaire est introduit dans le four de pré-réduction.

8. Procédé selon la revendication 1, ou la revendication 2, dans lequel le four de fusion et de réduction vertical est divisé par une plaque perforée en une zone inférieure et une zone supérieure, lesdites entrées supérieures et inférieures sont situées and la zone inférieure, la zone supérieure constitue le four de pré-réduction et la plaque perforée permet au gaz réducteur engendré dans la zone inférieure de pénétrer dans la zone supérieure et de fluidiser le minerai dans cette zone et de le soumettre à la pré-réduction dans ladite zone, le procédé comprenant la phase consistant à introduire le minerai pré-réduit avec un fondant et de l'air ou de l'air enrichi en oxygène chauffé à une température élevée, dans la zone inférieure en passant par les entrées situées le plus haut.

9. Procédé selon la revendication 1 ou la revendication 2, dans lequel le four de pré-réducation est divisé par une plaque perforée en une partie supérieure etu ne partie inférieure, lequel procédé consiste à charger ledit agent réducteur solide carboné sous forme pulvérulente, ledit minerai et un fondant pulvérulent dans la partie supérieure du four de pré-réduction à introduire le gaz réducteur dans la partie inférieure du four de pré-réduction pour provoquer la carbonisation de l'agent réducteur solide carboné et la pré-réduction dudit minerai pour former des particules mixtes de matière carbonisée de fondant et de minerai pré-réduit à introduire es particules mixtes ainsi formées par les entrées situées le plus haut dudit four de fusion et de réduction vertical, en même temps que de l'air ou de l'air enrichi en oxygène à une température élevée, à séparer le gaz engendré dans le four de pré-réduction en goudron et en un gaz combustible contenant des hydrocarbures et à introduire le gaz combustible avec ledit gaz réducteur dans le four de pré-réduction.

10. Installation destinée à être utilisée pour fondre et affiner un minerai pulvérulent ou sous forme de grains fins qui contient un oxyd métallique, conformément au procédé de la revendication 8, laquelle installation comprend un four de fusion et de réduction vertical, ledit four étant divisé par une plaque perforée en une zone supérieure destinée à effectuer une pré-réduction dudit minerai à l'état fluidisé et une zone inférieure destinée à fondre et réduire le minerai ayant subi la pré-réduction pour former un métal liquide, un laitier liquide et un gaz réducteur qui s'élève dans la zone supérieure pour effectuer la pré- réduction; ladite zone inférieur étant équipée d'une entrée servant à introduire un agent réducteur solide carboné, des entrées supérieures et inférieures destinées à y insuffler de l'air ou de l'air enrichi en oxygène chauffé ax une tmepérature élevée, et une sortie servant à décharger le métal liquide et le laitier liquide; et ladite zone supérieure étant équipée d'une entrée servant à y introduire ledit minerai, d'une sortie destinée à permettre au minerai pré-réduit de se déverser en tro-plein depuis la zone supérieure et de pénétrer dans la zone inférieure en passant par des entrées situées le plus haut, et une sortie servant à évacuer le gaz d'échappement produit au cours de la préréduction.

11. Installation selon la revendication 10, qui comprend un dispositif servant à acheminer l'agent réducteur solide carboné, ce dispositif traversant la zone supérieure et la plaque perforée et se terminant dans ladite zone inférieure pour former ladite entrée servant à introduire ledit agent réducteur solide carboné.

12. Installation selon la revendication 10, qui comprend un dispositif servant à introduire l'agent réducteur solide carboné, lequel dispositif est placé à l'extérieur dudit four de fusion et de réduction et se termine au niveau de ladite entrée pour introduire l'agent réducteur solide carboné de manière que ledit agent réducteur solide carboné soit directement introduit en provenance de l'extérieur dudit four de fusion et de réduction.

13. Installation destinée à être utilisée pour la fusion et l'affinage d'un minerai pulvérulent ou sous forme granulaire fine contenant un oxyde métallique, conformément au procédé de la revendication 9, laquelle installation comprend: (a) un four de pré-réduction divisé par une plaque perforée en une partie supérieure dans laquelle un agent réducteur solide carboné est carbonisé pour former une matière carbonisée, et où ledit minerai est préchauffe et soumis à une pré-réduction et une partie inférieure dans laquelle le minerai préréduit, la matière carbonisée et un fondant sont mélangés; et (b) un four de fusion et de réduction vertical dans lequel les particules mixtes pré-réduites sont fondues et réduites par une réaction de combustion-fluidisation avec de l'air ou de l'air enrichi en oxygène à une température élevée pour former le métal liquide et du laitier liquide, ledit four de fusion et de réduction possédant des entrées supérieures et inférieures, un tube étant prévu pour amener lesdites particules mixtes pré-réduites des entrées situées le plus haut; et des moyens étant prévus pour introduire ledit air ou air enrichi en oxygène par les entrées situées le plus bas.

18

# FIG. 1

# FIG.2

EP 0 063 924 B2

FIG. 3

## FIG.4

## FIG. 5

# FIG. 6

Carbonaceous Material

80

63

Metal Oxide

69

70

72

71

B

M

A

65

A1

79

A2

Additive

64

68

S

75

Molten Metal

66

67

Tar

Hydrocarbon-Containing Fuel Gas

78

CO-Containing Fuel Gas

77

Air

73

74

76